# EUROPÄISCHE PATENTANMELDUNG

(11) **EP 0 867 259 A2**
(43) Veröffentlichungstag der Anmeldung: **30.09.1998**
(21) Anmeldenummer: 98102512.5
(22) Anmeldetag: 13.02.1998
(51) Int. Cl.: B23Q 35/128, G05B 19/42

(54) **Verfahren und Vorrichtung zum Kopieren von dreidimensionalen Gegenständen**

(30) Priorität: 15.02.1997 DE 19705883
(71) Anmelder: Wensing, Günther, 48703 Stadtlohn (DE); Dubbel, Bernd, 48308 Senden (DE); Klöter, Burkhard, 48161 Münster (DE)
(72) Erfinder: Wensing, Günther, 48703 Stadtlohn (DE); Dubbel, Bernd, 48308 Senden (DE); Klöter, Burkhard, 48161 Münster (DE)
(74) Vertreter: Habbel, Hans-Georg, Dipl.-Ing.

(57) **Zusammenfassung**

Die Erfindung betrifft ein Verfahren zum Kopieren von drei-dimensionalen Gegenständen, wobei die Oberflächenkontur eines Modells berührungsfrei durch einen Elektronen- oder Lichtstrahl erfaßt wird und das jeweils erfaßte Maß über einen Elektronen- oder Lichtstrahl auf ein Werkstück übertragen wird und das Werkstück entsprechend den Abmessungen des Modells zu einer Kopie dieses Gegenstandes durch materialabtragende Formgebungsverfahren bearbeitet wird, wobei für das materialabtragende Formgebungsverfahren eine vom Elektronen- oder Lichtstrahl unabhängige Vorrichtung verwendet wird.

## Beschreibung

Die Erfindung betrifft ein Verfahren und eine Vorrichtung zum Kopieren von dreidimensionalen Gegenständen.

Aus der gattungsbildenden EP 0 406 785 ist eine Vorrichtung zum Schneiden von Gummi- und Elastomerteilen bekannt, bei der über einen Laserstrahl ein Modell abgetastet wird und über einen umgeleiteten Laserstrahl wird das Werkstück entsprechend geschnitten. Diese Vorrichtung wird insbesondere zum Anfertigen von Stempeln verwendet. Diese Vorrichtung ist zum Kopieren von Gegenständen aus Stein nicht nutzbar, da der Laser als Bearbeitungsvorrichtung nicht zur Bearbeitung bzw. vom Abtragen von Material des Werkstückes einsetzbar ist.

Aus der EP 0 163 076 ist eine Vorrichtung und ein Verfahren zum Herstellen dreidimensionaler Gegenstände bekannt, bei dem ein Bild des Modells aufgenommen wird und aufgrund der Meßdaten Schablonen angefertigt werden, die hinterher zu einem dreidimensionalen Objekt zusammengesetzt werden können. Diese Vorrichtung ist sehr aufwendig und darüber hinaus aufgrund der Technik störanfällig, insbesondere bei den staubigen Arbeitsbedingungen in Steinmetzarbeitshallen.

Da es bislang für Steinmetz und Bildhauer keine geeignete Vorrichtung gibt, um z. B. Steinfiguren oder Steinornamente zu kopieren, wird eine seit Jahrhunderten bekannte Vorrichtung bzw. Arbeitsweise verwendet. Dabei werden die Originale in der Regel von ihrem Standort entfernt und zum Restaurationsort verbracht. Am Restaurationsort werden die Gegenstände mechanisch abgetastet, wobei insbesondere eine Vorrichtung verwendet wird, die 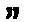 Pantograph" bzw. Punktiergestell genannt wird, wobei der Pantograph aus einem Träger besteht, der an die Originalskulptur befestigt wird, und an dem Träger befinden sich Abtastnadeln, die beweglich ausgebildet sind und so weit an das Modell herangeschoben werden können, bis die Abtastnadeln mit ihrer Spitze das Modell berühren. Nach einem derartigen Abtasten des Originalmodells wird der Pantograph an dem noch zu bearbeitenden Werkstück angeordnet und das Werkstück wird so lange beispielsweise mittels eines Meißels od. dgl. abgetragen, bis die Meßnadel in die Abtastposition verbracht werden kann, die sie an dem Originalmodell eingenommen hatte, so daß an dieser ausgewählten Stelle die Maße des Modells und des Werkstückes übereinstimmen.

In der Regel werden diese Messungen an einigen markanten Punkten des Originals durchgeführt und je mehr Meßpunkte gewählt werden, desto mehr ähnelt die Kopie tatsächlich dem Originalmodell.

Dieses bekannte Verfahren des Pantographens ist jedoch aus mehreren Gründen nachteilig: Zum einen ist es für den Kopierenden mühsam, viele Male den Pantographen vom Modell zum Werkstück umzusetzen und umgekehrt. Darüber hinaus wird, um dem Pantographen einen sicheren Sitz auf dem Modell zu ermöglichen, an dem Modell ein fester Ansatzpunkt für den Pantographen geschaffen, beispielsweise durch Herstellen einer Bohrung bzw. Einsetzen eines Stahlstiftes, wodurch das Originalmodell, wenn auch geringfügig, verletzt wird. Zudem ist es für den Kopierenden hinderlich, wenn er bei seiner Arbeit an dem Werkstück von dem Pantographen behindert wird, der ja die freie Zugänglichkeit zu dem Werkstück aufgrund seiner Haltevorrichtung und seiner Meßnadeln begrenzt. Daher ist es für den Kopierenden notwendig, entweder stets um die Bauteile des Pantographen herum an dem Werkstück zu arbeiten oder es ist notwendig, den Pantographen bei der Arbeit an dem Werkstück abzunehmen und anschließend wieder aufzusetzen, um zu überprüfen, ob die Originalmaße eingehalten wurden. Es ist einsichtig, daß dieses häufige An- und Absetzen des Pantographen mühsam und zeitaufwendig ist.

Der Erfindung liegt die Aufgabe zugrunde, das Kopieren dreidimensionaler Steingegenstände dahingehend zu verbessern, daß die Erstellung einer Kopie mit erheblich weniger Zeitaufwand und weniger Kraftaufwand für den Kopierenden möglich ist und daß die entsprechende Vorrichtung kostengünstig und robust ist.

Diese der Erfindung zugrundeliegende Aufgabe wird durch das Verfahren mit den Merkmalen des Anspruches 1 sowie mit einer Vorrichtung mit den Merkmalen des Anspruches 8 bzw. mit den Merkmalen des Anspruches 12 gelöst.

Ein Ausführungsbeispiel der Erfindung wird nachfolgend in den Zeichnungen dargestellt, wobei
- Fig. 1: eine Seitendarstellung der vorgeschlagenen Vorrichtung mitsamt eines davor angeordneten Modells darstellt,
- Fig. 2: stellt eine Ansicht von vorne mit einem davorstehenden Modell bzw. Werkstück dar,
- Fig. 3: zeigt ein weiteres Ausführungsbeispiel von der Seite und
- Fig. 4: zeigt eine Ansicht des Ausführungsbeispieles entsprechend Fig. 3 von oben.

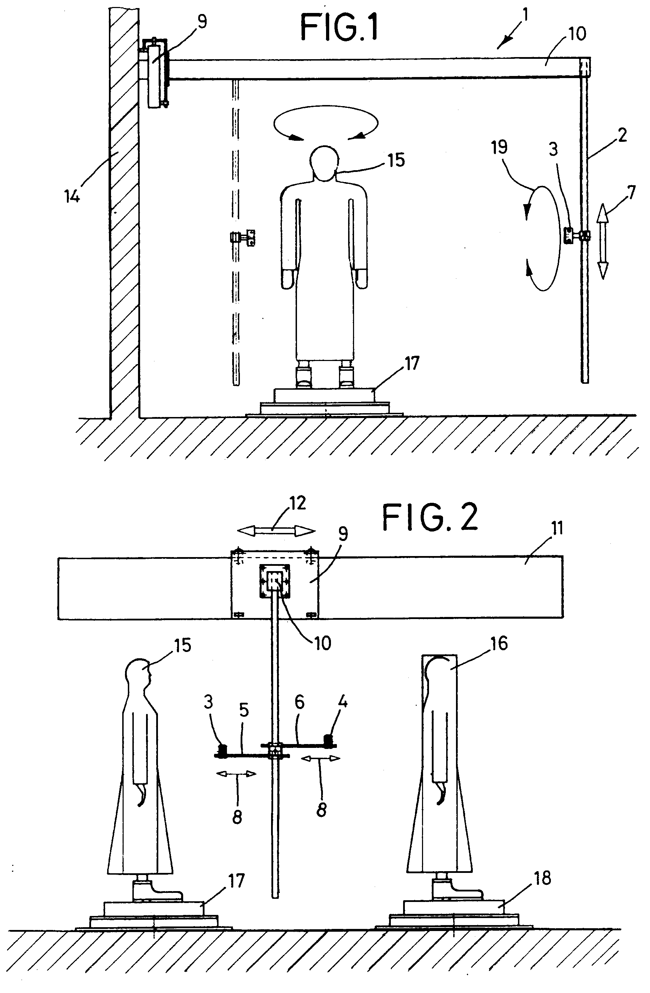

Bezugnehmend auf Fig. 1 ist eine Kopiervorrichtung 1 für drei-dimensionale Gegenstände, beispielsweise Gegenstände der Bildhauerei, dargestellt, die im wesentlichen aus einer Haltevorrichtung 2 besteht, die zwei Laserstrahler 3 und 4 trägt, wie aus Fig. 2 deutlich wird.

Die Haltevorrichtung 2 ist im wesentlichen eine Haltestange, an der die Laserstrahler 3, 4 über Befestigungsmittel 5, 6 angeordnet sind, wobei die Befestigungsmittel 5, 6 wiederum beispielsweise stangenartig ausgebildet sein können. Die an den Befestigungsmitteln 5, 6 angeordneten Laserstrahler 3 und 4 können je nach Bedarf an der Haltevorrichtung 2 vertikal verschoben werden, wie durch den Pfeil 7 verdeutlicht wird. Je nach Bedarf können die Laserstrahler 3, 4 zudem auch verschwenkt werden, um die Ausstrahlrichtung in vertikaler und horizontaler Richtung zu verändern, wie dies zum Teil durch die Pfeile 8 bzw. 9 verdeutlicht wird.

Die Haltevorrichtung 2 ist an ihrem oberen Ende mit einem Ausleger 10 verbunden, der wiederum an einem Ende mit einem Rollschlitten 9 verbunden ist, der auf einer Führungsbahn 11 beweglich geführt ist, wie durch Pfeil 12 veranschaulicht wird. Es ist vorteilhaft, an der Führungsbahn 11 zwei Raststellungen vorzusehen, um bei einem Bewegen des Rollschlittens 9 auf der Führungsbahn 11 stets zwei definierte Haltepunkte für den Rollschlitten 9 und die daran angeordnete Haltevorrichtung 2 zu haben, wobei die Raststellungen z. B. jeweils gegenüber dem Modell und gegenüber dem Werkstück liegen, so daß jeweils die Laserstrahler 3, 4 die exakt gleiche Position zu diesen beiden Gegenständen einnehmen.

Die Führungsbahn 11 mitsamt des daran angeordneten Rollschlitten 9 sind an einer Wandung 14 befestigt. Es ist jedoch auch möglich, diese Anordnung auf einem Ständerwerk z. B. mitten in einer Halle oder im Freien zu montieren.

Im Bereich der Kopiervorrichtung 1 ist ebenfalls ein Modell 15 angeordnet, das als Kopiermuster für ein Werkstück 16 dient. Sowohl das Modell als auch das Werkstück sind auf Drehtellern 17, 18 angeordnet, wobei diese Drehteller in vorteilhafter Ausgestaltung mit Rastelementen versehen sind, so daß die Drehteller zu vorgegebenen Winkelstellungen einrasten. Diese Rastvorrichtungen können beispielsweise Rasterbohrungen und Rastbolzen sein.

Die Funktionsweise der Erfindung ist wie folgt:

Um ein Modell 15 zu kopieren, wobei es sich bei diesem Modell beispielsweise um ein historisches Modell handeln kann, das aufgrund der Witterungs- und Umwelteinflüsse vom Verfall bedroht ist, wird das Modell 15 auf den Drehteller 17 gestellt. Auf einen benachbarten Drehteller 18 wird das Werkstück 16 gesetzt, das später einmal dem Modell 15 gleichen soll.

Anschließend werden die Laserstrahler 3 und 4 derart punktuell auf das Modell 15 ausgerichtet, so daß auf einem markanten Punkt des Modells 15 die beiden Strahlen der Laser 3 und 4 in Deckung gebracht werden.

Anschließend werden die Laserstrahler 3 und 4 zum Werkstück 16 verbracht und auf die Stelle gerichtet, die später der vorher abgemessenen markanten Stelle des Modells 15 entsprechen soll. Dabei entspricht der Abstand der Laserstrahler 3, 4 zum Werkstück 16 dem ehemaligen Abstand der Laserstrahler zu dem markanten Punkt des Modells 15 bei der vorher durchgeführten Messung. Da die Oberfläche des Modells 16 nun einen anderen Abstand zu den Laserstrahlern 3, 4 hat, d. h. der Abstand ist geringer als bei der vorherigen Messung am Modell 15, sind die Punkte der Laserstrahler auf dem Werkstück nicht deckungsgleich, sondern sind zueinander versetzt. Anschließend kann der Kopierende mit seiner abtragenden Arbeit z. B. mittels Meißel, Bohrer u. dgl. beginnen und so lange Material vom Werkstück abtragen, bis die Punkte beider Laserstrahlen genauso übereinanderdeckend angeordnet sind, wie bei der vorher durchgeführten Messung am Modell, so daß sichergestellt ist, daß an dieser Stelle beide Gegenstände das gleiche Maß haben.

Es ist besonders vorteilhaft, wenn die Strahlen beider Laserstrahler unterschiedlich ausgebildet sind, d. h. farbige Unterschiede aufweisen bzw. eine andere Form haben, so daß der Kopierende den rechten und den linken Laserstrahler unterscheiden kann, um genau zu wissen, ob er bei nicht deckenden Laserstrahlen zu tief geraten ist oder ob er noch weiter Material vom Werkstück abtragen muß. Es ist beispielsweise möglich, auf der einen Seite einen Punktlaser anzuwenden und auf der anderen Seite einen Linienlaser bzw. die Laserstrahler ihren Farben nach unterschiedlich auszubilden. Um zu erreichen, daß die Laser jeweils den perfekten Abstand und den gleichen Abstand einerseits bei der Messung am Modell einerseits und anschließend bei der Messung am Werkstück andererseits aufweisen, ist es vorteilhaft, daß Rasterstellungen vorgesehen sind, so daß der Rollenschlitten 9 bei einer Bewegung stets bis zu diesen Raststellungen fortbewegt werden kann und nach Erreichen dieser definierten Raststellungen die entsprechenden Messungen vorgenommen werden können.

Die oben beschriebene Messung wird nun mehrere Male durchgeführt und entsprechenderweise wird Material vom Werkstück abgetragen und je mehr Messungen durchgeführt werden, desto genauer entspricht das Werkstück später dem Ursprungsmodell.

Es ist sehr vorteilhaft, mehrere Strahlenpaare zu verwenden bzw. gleichzeitig mehrere Punkte des Modells/Werkstückes abzutasten, um die Geschwindigkeit des Kopierverfahrens zu potenzieren.

Die Verwendung der Laser hat den Vorteil, daß sich der Kopierende frei beim Bearbeiten des Werkstückes am Werkstück bewegen kann und nicht durch einen Pantograph oder ähnliche Meßvorrichtungen behindert wird. Zudem ist das häufige Umsetzen der Kopiervorrichtung 1 vom Werkstück zum Modell und zurück durch die Verwendung eines Laufschlittens äußerst einfach und leicht durchzuführen.

Sehr wichtig ist auch, daß durch das vorgeschlagene Verfahren bzw. die vorgeschlagene Vorrichtung erstmalig eine berührungslose Kopieherstellung auch beim Kopieren sehr empfindlicher Kunstgegenstände ermöglicht wird, z. B. farbig gefasster Skulpturen.

Um bei der Messung an dem Modell die beiden Laserpunkte an einem markanten Punkt des Modells in Deckung zu bringen, ist es einerseits möglich, die beiden Laser getrennt voneinander zu bewegen und so einzustellen, daß sie sich an einem markanten Punkt des Modells überdecken. Es ist ebenfalls möglich, daß die beiden Laserstrahler 3, 4 fest an den Befestigungsmitteln 5, 6 bzw. der Haltevorrichtung 2 angeordnet sind und die gesamte Haltevorrichtung hin- und herbewegbar auszugestalten, um bei einer Veränderung der Entfernung der gesamten Haltevorrichtung mitsamt der Laserstrahler in Bezug auf das Modell bzw. das Werkstück zu erreichen, daß in einer bestimmten Stellung die beiden Laserstrahlen sich an dem gewünschten markanten Punkt des Modells überdecken. Bei einer entsprechenden Vorrichtung ist es vorteilhaft, daß die Haltevorrichtung 2 in ihrer entsprechend eingestellten Lage bei Überdeckung der beiden Laserstrahlen diese Haltevorrichtung verstarrt werden kann, z. B. mittels mechanischer Haltemittel bzw. pneumatisch oder hydraulisch.

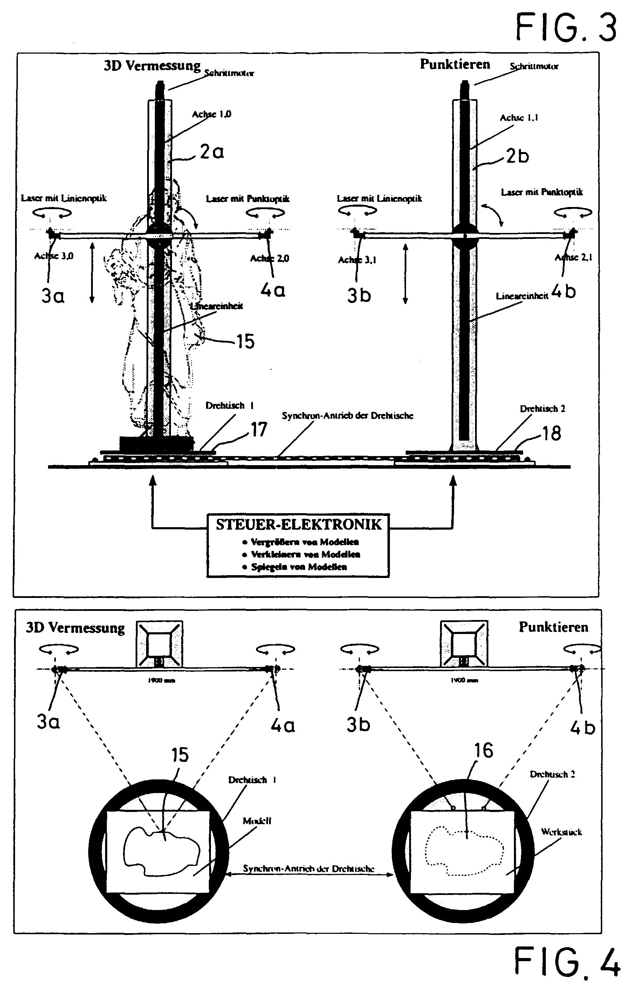

Bezugnehmend auf Fig. 3 ist ein weiteres Ausführungsbeispiel der Erfindung dargestellt, wobei in diesem Ausführungsbeispiel zwei Haltevorrichtungen 2a und 2b verwendet werden, die jeweils Laserstrahlen 3a, 4a bzw. 3b, 4b tragen. Die Haltevorrichtung 2a ist dem Modell 15 zugeordnet und die Haltevorrichtung 2b dem Werkstück 16. Das Modell und das Werkstück stehen jeweils auf Drehtellern 17, 18, die motorisch angetrieben werden können, um das Modell bzw. das Werkstück um die eigene Achse zu drehen. Die Antriebe der Drehteller 17, 18 sind verbunden bzw. beide Drehteller haben einen gleichen Antrieb, so daß eine synchrone Drehung beider Drehteller gewährleistet ist.

Die Laserstrahler 3a, 3b, 4a, 4b innen in besonders vorteilhafter Ausgestaltung ebenfalls in Verbindung miteinander stehen, d. h. bei einer punktgenauen Ausrichtung der Laserstrahler 3a und 4a an der Haltevorrichtung 2a auf das Modell 15, werden diese Einstellungen bzw. Bewegungen der Laserstrahler 3a und 4b z. B. über eine Datenleitung oder sonstige Datenfernübertragung auf die Laserstrahler 3b, 4b übertragen, so daß diese Laserstrahler 3b, 4b die gleichen Bewegungen ausführen und somit die gleiche Einstellung einnehmen wie die Laserstrahler 3a und 4a.

Dazu ist es besonders vorteilhaft, wenn die jeweiligen Elektronen oder Lichtstrahler einen Antrieb zu ihrer beweglichen Ausbildung aufweisen.

Bei einer Skalierung erfolgt die Bewegung der Strahler nicht synchron, d. h. wenn die fertige Kopie z. B. größer/kleiner ist als die Modellvorgabe oder z. B. beim Spiegeln.

Die Laserstrahler 3a, 4b können z. B. mit Wegaufnehmern ausgerüstet sein, die die Verstellung dieser Laserstrahler aufnehmen und über eine Informationsleitung an Einstellmotoren bzw. Schrittmotoren weiterleiten, die mit den Laserstrahlern 3b, 4b verbunden sind bzw. eine entsprechende Bewegung der Haltevorrichtung 2 veranlassen, um eine entsprechende Einstellung auf das Werkstück zu ermöglichen, wie dies beim Modell durch den Laserstrahl 3a und 4a vorgenommen wurde.

Durch diese Art der Einstellung wird ein besonders zügiges Arbeiten ermöglicht, da lediglich einmal die korrekte Einstellung der Laserstrahler am Modell durchgeführt werden muß und sich automatisch die Kopiervorrichtung am Werkstück entsprechend einstellt und der das Werkstück Bearbeitende sofort mit seiner Arbeit am Werkstück anfangen kann.

Zusätzliche Vorteile bietet dieses Verfahren, wenn es mit einer Steuerelektronik ausgestattet ist, um durch die Umsetzung der bei der Einstellung erhaltenen Daten z. B. eine Vergrößerung von Modellen, ein Verkleinern von Modellen bzw. ein Spiegeln von Modellen zu ermöglichen. Das heißt, daß die Modellvorgabe auch skalierbar und/oder spiegelbar ist, wobei beim Skalieren die jeweiligen miteinander verbundenen Strahler nicht unbedingt synchrone Bewegungen ausführen.

Bezugnehmend auf Fig. 4 ist die Ausführung entsprechend Fig. 3 in einer Ansicht von oben dargestellt und in dieser Abbildung wurden die Laserstrahler 3a und 4a so eingestellt, daß sie sich exakt an einem Punkt des Modells treffen. Diese Information der Lasereinstellung, d. h. eine Information bezüglich der Winkelstellung der Laser bzw. des Abstandes der Haltevorrichtung von dem Modell, z. B. bei starr angeordneten Lasern, wird erfaßt und diese Information wird an eine geeignete Steuereinrichtung weitergegeben, die ihrerseits diese Informationen umsetzt und an geeignete Aktoren weitergibt, um eine entsprechende Einstellung der Laserstrahler 3b und 4b zum Werkstück zu erreichen. Dies kann z. B. durch eine Veränderung der Laserstrahler an der Haltevorrichtung durchgeführt werden bzw. durch eine Veränderung des Abstandes der Haltevorrichtung 2b zum Werkstück selbst.

## Patentansprüche

1. Verfahren zum Kopieren von dreidimensionalen Gegenständen, wobei die Oberflächenkontur eines Modells berührungsfrei durch einen Elektronen- oder Lichtstrahl erfaßt wird und das jeweils erfaßte Maß über einen Elektronen- oder Lichtstrahl auf ein Werkstück übertragen wird und das Werkstück entsprechend den Abmessungen des Modells zu einer Kopie dieses Gegenstandes durch materialabtragende Formgebungsverfahren bearbeitet wird, dadurch gekennzeichnet, daß für das materialabtragende Formgebungsverfahren eine vom Elektronen- oder Lichtstrahl unabhängige Vorrichtung verwendet wird.

2. Verfahren gemäß Anspruch 1, gekennzeichnet durch die punktuelle Erfassung der Modell-Kontur über im Abstand zueinander angeordnete Elektronen- oder Lichtstrahler.

3. Verfahren gemäß Anspruch 2, gekennzeichnet durch die Verwendung von Elektronen- oder Lichtstrahlen unterschiedlicher Strahlform oder Farbe.

4. Verfahren gemäß einem der vorhergehenden Ansprüche, gekennzeichnet dadurch, daß mehrere Elektronen- oder Lichtstrahlen verwendet werden und so mehrere Punkte der Modell-Kontur in einem Übertragungsvorgang übertragen werden können.

5. Verfahren nach einem der vorhergehenden Ansprüche, dadurch gekennzeichnet, daß mindestens ein Strahlenpaar auf der Modelloberfläche zur Deckung gebracht wird, diese Einstellung ohne Ermittlung einer Maßzahl über eine Schiebeeinrichtung auf das Werkstück übertragen wird und aufgrund des größeren Materialvolumens das Bild zweier Strahlen projiziert, die durch ein unabhängiges materialabtragendes Formgebungsverfahren wieder zur Deckung gebracht werden, wodurch die übertragenden Punkte der Oberflächenkontur des Modells (15) exakt auf das Werkstück (16) übertragen werden.

6. Verfahren gemäß einem der Ansprüche 1 bis 4, gekennzeichnet durch die Erfassung der Oberflächenkontur des Modells (15) mittels einer ersten Meßeinrichtung und durch eine Weitergabe der erhaltenen Meßwerte an eine zweite Einrichtung, die diese erhaltenen Informationen auf das Werkstück (16) überträgt.

7. Verfahren gemäß einem der vorhergehenden Ansprüche 1 bis 4 oder 6, gekennzeichnet durch die Skalierbarkeit der erhaltenen Meßwerte von der Modellvorgabe zur erstmaligen Herstellung verkleinerter, vergrößerter oder gespiegelter Werkstücke.

8. Vorrichtung zur Durchführung des Verfahrens gemäß einem der vorhergehenden Ansprüche, gekennzeichnet durch mindestens zwei Elektronen- oder Lichtstrahlerzeuger (3, 4), die im Abstand zueinander angeordnet sind und deren Abstand zueinander bzw. zum zu bearbeitenden Gegenstand veränderbar ausgebildet ist zugunsten einer möglichen deckungsgleichen Ausrichtung beider erzeugten Lichtquellen auf den zu bearbeitenden Gegenstand, wobei die Elektronen- oder Lichtstrahlerzeuger (3, 4) ortsbeweglich angeordnet sind zugunsten einer Beweglichkeit der Vorrichtung vom Modell zum Werkstück und umgekehrt.

9. Vorrichtung gemäß Anspruch 8, gekennzeichnet durch die Haltevorrichtung (2), die an einer schienenartig ausgebildeten Führungsbahn (11) bewegbar angeordnet ist.

10. Vorrichtung gemäß einem der vorhergehenden Ansprüche 8 oder 9, gekennzeichnet durch mindestens eine Licht- bzw. Elektronenquelle (3, 4), die beweglich an einer Haltevorrichtung (2) angeordnet ist.

11. Vorrichtung gemäß einem der vorhergehenden Ansprüche 8 bis 10, gekennzeichnet durch die in ihrer Position zum Modell (15) bzw. Werkstück (16) verstarrbar ausgebildete Licht- bzw. Elektronenquelle (3, 4).

12. Vorrichtung gemäß einem der vorhergehenden Ansprüche 1, 2 oder 4, gekennzeichnet durch die aus mindestens zwei Paaren von Elektronen- oder Lichtstrahlerzeugern bestehende Kopiereinrichtung (1), wobei die Elektronen- oder Lichtstrahler (3a, 4a) dem Modell (15) zugeordnet sind und wobei die Elektronen- oder Lichtstrahler (3b, 4b) dem Werkstück (16) zugeordnet sind.

13. Vorrichtung gemäß Anspruch 12, gekezeichnet durch die dem Modell (15) und dem Werkstück (16) zugeordneten Licht- oder Elektronenstrahler (3a, 3b, 4a, 4b), die über eine Steuereinrichtung miteinander verbunden sind.

14. Vorrichtung gemäß einem der vorhergehenden Ansprüche, gekennzeichnet durch die mit einem Antrieb versehenen Drehteller (17, 18), die zugunsten einer synchronen Drehbewegung über eine Informationsleitung miteinander verbunden sind.
